# EUROPÄISCHE PATENTSCHRIFT

(11) **EP 3 602 714 B1**
(45) Veröffentlichungstag und Bekanntmachung des Hinweises auf die Patenterteilung: **21.04.2021**
(21) Anmeldenummer: 18730241.9
(22) Anmeldetag: 23.05.2018
(51) Int. Cl.: H02J 1/12

(54) **REDUNDANTES GLEICHSPANNUNGSNETZ**
REDUNDANT DIRECT CURRENT NETWORK
RÉSEAU DE TENSION CONTINUE REDONDANT

(30) Priorität: 24.05.2017 EP 17172717
(43) Veröffentlichungstag der Anmeldung: 05.02.2020
(73) Patentinhaber: Siemens Energy Global GmbH & Co. KG, 81739 München (DE)
(72) Erfinder: GRITSCH, Christian, 90491 N rnberg (DE)
(86) Internationale Anmeldenummer: PCT/EP2018/063433
(87) Internationale Veröffentlichungsnummer: WO 2018/215501

(56) Entgegenhaltungen:
- DE-A1-102006 010 713
- DE-A1-102008 010 979
- DE-A1-102014 208 201
- DE-A1-102015 222 544

## Beschreibung

Die Erfindung betrifft ein Gleichspannungsnetz mit einem ersten Gleichspannungsteilnetz, einem zweiten Gleichspannungsteilnetz und einem Energiespeicher. Ferner betrifft die Erfindung ein Verfahren zur Steuerung eines derartigen Gleichspannungsnetzes.

Heutzutage werden Frequenzumrichter zu immer größeren Verbänden ausgedehnt und haben neben der klassischen Funktion, nur einen Motor zu regeln, auch die Möglichkeit Netzeinspeisung zu sein (z.B. bei Windkraftanlagen) oder bilden sogar ein ganzes Gleichspannungsnetz, auch als DC-Netz bezeichnet. Hier sollen nun ein Gleichspannungsnetz betrachtet werden, bei dem elektrische Vorrichtungen wie Verbraucher und Quellen elektrische Energie austauschen. Die Versorgung des Gleichspannungsnetzes mit elektrischer Energie erfolgt mit Hilfe eines oder mehrerer Stromrichter aus einem Wechselspannungsnetz.

Ein typisches Anwendungsbeispiel für ein Gleichspannungsnetz ist die Energieversorgung innerhalb eines Schiffes oder eines Fahrzeugs, insbesondere eines Schienenfahrzeugs. Mit Hilfe des Gleichspannungssystems wird elektrische Energie an einzelne Verbraucher verteilt. Dabei soll auch im Fehlerfall immer noch ein Teil der vorhandenen Antriebe und Einrichtungen funktionieren. Dies wird als Redundanz bezeichnet.

Gegenwärtig wird ein Gleichspannungsnetz mit Sicherungen und Trennern ausgestattet, um im Fehlerfall die Fehlerquelle vom Netz trennen und den Betrieb der übrigen Verbraucher aufrecht erhalten zu können. Bei einem Kurzschluss kann allerdings nicht ausgeschlossen werden, dass elektrische Komponenten, die mit dem Gleichspannungsnetz verbunden sind, geschädigt werden. Diese Schädigung kann zum Ausfall der entsprechenden elektrischen Komponente führen. Um dies zu verhindern werden teilweise schnelle Schalter eingesetzt, welche die schädigende Wirkung des Kurzschlusses reduzieren sollen
DE 10 2014 208201 A1 zeigt ein Bordnetz mit zwei Gleichspannungsnetzteilen und einem Energiespeichernetz.

Der Erfindung liegt die Aufgabe zugrunde ein Gleichspannungsnetz zu verbessern.

Die Aufgabe wird durch ein Gleichspannungsnetz mit einem ersten Gleichspannungsteilnetz, einem zweiten Gleichspannungsteilnetz, einem Energiespeichernetz, einem ersten Leistungswandler, einem zweiten Leistungswandler und einem Energiespeicher gelöst, wobei das erste Gleichspannungsteilnetz und das Energiespeichernetz mittels des ersten Leistungswandlers miteinander verbunden sind, wobei das zweite Gleichspannungsteilnetz und das Energiespeichernetz mittels des zweiten Leistungswandlers miteinander verbunden sind, wobei das Energiespeichernetz derart mit dem Energiespeicher verbunden ist, dass das Energiespeichernetz die Spannung des Energiespeichers aufweist, wobei das erste Gleichspannungsteilnetz und/oder das zweite Gleichspannungsteilnetz über mindestens eine Einspeisevorrichtung mit mindestens einem Wechselspannungsnetz verbindbar sind. Ferner wird die Aufgabe durch ein Verfahren zur Steuerung eines derartigen Gleichspannungsnetzes gelöst, wobei bei Auftreten eines Fehlers im Gleichspannungsnetz abhängig vom Ort des Fehlers mindestens einer der Leistungswandler abgeschaltet wird.

Weitere vorteilhafte Ausgestaltungen der Erfindung sind in den abhängigen Ansprüchen angegeben.

Der Erfindung liegt die Erkenntnis zugrunde, dass sich die Ausfallsicherheit eines Gleichspannungsnetzes dadurch erhöhen lässt, dass man das Gleichspannungsnetz in zwei Gleichspannungsteilnetze aufteilt. Die elektrischen Vorrichtungen wie Verbraucher und/oder Quellen sind mit einem der Teilnetze verbunden. Darüber hinaus weist das Gleichspannungsnetz als weiteres Teilnetz ein Energiespeichernetz auf. Bei Ausfall der Energieversorgung aus einem speisenden Netz kann mit Hilfe des Energiespeichers der Energieaustausch mit den elektrischen Vorrichtungen aufrecht erhalten werden. Das Energiespeichernetz kann ein Gleichspannungsnetz oder ein Wechselspannungsnetz sein. Die Verwendung eines Gleichspannungsnetzes eignet sich besonders für Energiespeicher mit einer Gleichspannung. D.h. an den Klemmen weisen diese Speicher im Betrieb eine Gleichspannung auf. Typische Vertreter für diese Energiespeicherart sind Batterien und Kondensatoren (beispielsweise Doppelschichtkondensatoren wie UltraCaps).

Diese mindestens drei Teilnetze werden mit Hilfe von Leistungsstellern miteinander verbunden. Als Leistungssteller können DC/DC Spannungswandler, insbesondere bidirektionale DC/DC Spannungswandler, auch als DCP bekannt, oder Stromrichter verwendet werden. Stromrichter übertragen Energie zwischen einer Gleichspannungsseite und einer Wechselspannungsseite. Für die Anwendung in einem Gleichspannungsnetz sind bidirektionale Stromrichter von besonderem Interesse, da sie einen Energiefluss in beide Richtungen, also von der Wechselspannungsseite zur Gleichspannungsseite sowie von der Gleichspannungsseite zur Wechselspannungsseite ermöglichen. Diese Leistungssteller sind zwischen den Teilnetzen angeordnet und ermöglichen den kontrollierten Austausch von Energie zwischen den Teilnetzen. Durch die Leistungssteller ist es möglich, Energiespeicher direkt mit dem Energiespeichernetz zu verbinden. Das Stellen der Spannung, insbesondere zur Leistungsregelung, erfolgt dann über die mit dem Energiespeichernetz verbundenen Leistungsstellern. Damit können Batterien und/oder Ultracaps in einem DC Energiespeichernetz oder rotierende Speicher in einem AC Gleichspannungsnetz geladen bzw. entladen werden.

Durch die Aufteilung des Gleichspannungsnetzes in mindestens zwei Gleichspannungsteilnetze ist es möglich, komplexe Anordnungen von Verbrauchern und/oder Quellen bezüglich des Leistungsflusses zu beherrschen. Die Nutzung der Gleichspannung als DC-Bus in einem Gleichspannungsnetz erlaubt weitreichende Verzweigungen und Einspeisungen, da das Segmentierungskonzept mittels Leistungssteller nahezu beliebig erweiterbar ist. Damit wird der AC-Bus, d.h. eine Versorgung der einzelnen elektrischen Vorrichtungen mit Wechselspannung, überflüssig und es können beliebig Quellen, Lasten und Energiespeicher eingebaut werden. Die Redundanz erhöht sich mit der Anzahl der Teilnetze.

In allen Teilnetzen lässt sich mittels der Leistungssteller die Spannung nach Belieben steuern oder regeln. Im Energiespeichernetz wird die Spannung je nach Betriebsart des dort angeschlossenen Energiespeichers geregelt. Damit haben die Leistungssteller mehrere Funktionen. Zum einen ist dies die sichere Trennung der einzelnen Teilnetze beispielsweise für den Fehlerfall. Darüber hinaus regeln oder steuern die Leistungssteller den Leistungsaustausch zwischen den Teilnetzen. Des Weiteren wird die Spannung am Energiespeichernetz so eingestellt, dass nach Bedarf der Energiespeicher geladen oder entladen wird. Dieses System verschafft eine deutliche Verbesserung der Zuverlässigkeit bei Einsatz nur weniger Komponenten, da beispielsweise auf ein Batterieladegerät verzichtet werden kann.

Bei Kurzschluss in einem Teilnetz können die beiden anderen Teilnetze weiter betrieben werden. D.h. die Batteriepufferung bleibt erhalten. Insbesondere im Einsatzfall "Schiffsantrieb" ist dies von großer Bedeutung und wird bei der Schiffsabnahme geprüft. Bei Verwendung von Schaltern anstelle von Leistungsstellern bewirkt der Ausfall eines Schalters, dass die Anlage nicht mehr sicher betrieben werden kann. Bei Ausfall eines Leistungsstellers kann noch immer mindestens ein Gleichspannungsteilnetz die angeschlossenen Verbraucher versorgen. Somit kann beispielsweise bei einem Schiff noch die Hälfte der Antriebsleitung erbracht werden.

Besonders vorteilhaft ist das Gleichspannungsnetz, wenn es ein Inselnetz darstellt. Dies ist beispielsweise auf Schiffen oder in Fahrzeugen, insbesondere in Schienenfahrzeugen, der Fall. Die Belastung durch große Verbraucher, insbesondere das Ein- und Ausschalten von großen Verbrauchern kann durch die Bereitstellung von Energie aus dem Energiespeicher verringert werden. Auswirkungen auf andere Komponenten, beispielsweise durch einen Einbruch in der DC-Spannung oder einer kurzfristigen Überspannung, können durch die hohe Dynamik des Leistungsstellers vollständig, zumindest größtenteils, vermieden werden.

Durch die Aufteilung des Gleichspannungsnetzes in mindestens zwei Gleichspannungsteilnetze wird ermöglicht, dass bei Fehlern, z.B. Kurzschluss in einem Teilnetz, keine Komponenten in dem anderen Teilnetz oder den anderen Teilnetzen beschädigt werden. Durch die Leistungssteller kann darüber hinaus in jedem Teilnetz autark die Spannung unabhängig von der Spannung der übrigen Teilnetze geregelt oder gesteuert werden. Dies ermöglicht ein Laden bzw. Entladen einer direkt verbundenen Batterie. Auf den Einsatz zusätzlicher Batterieladegeräte, die nur eine sehr beschränkte Dynamik aufweisen, kann verzichtet werden. Dies spart Kosten und führt zu einer hohen Dynamik in der Regelung und der Reaktion auf Fehlerfälle. Selbst im Falle eines Ausfalls von einem Leistungssteller kann noch immer ein Teilnetz weiter betrieben werden. Dies ist insbesondere bei Schiffsanwendungen oder in Schienenfahrzeugen vorteilhaft, weil immer noch ein Gleichspannungsteilnetz und damit ein Antrieb betriebsbereit bleibt, so dass das Fahrzeug steuerbar ist. Bei der Anwendung auf einem Schiff wird damit die Manövrierfähigkeit sichergestellt.

Bei einer vorteilhaften Ausgestaltung der Erfindung weist der erste Leistungswandler und der zweite Leistungswandler jeweils einen Gleichspannungswandler auf und die Spannung des Energiespeichers ist eine Gleichspannung. Gleichspannungswandler werden oftmals auch als DC/DC Wandler bezeichnet. Vorteilhafterweise sollte dieser einen bidirektionalen Energiefluss erlauben. Diese DC/DC Wandler werden dann auch als DCP bezeichnet. Mit diesem lassen sich die Gleichspannungen im Gleichspannungsnetz besonders dynamisch einstellen. So kann auf einen Fehlerfall derart schnell reagiert werden, dass es zu keinen Beschädigungen an elektrischen Vorrichtungen kommt. Darüber hinaus können Energiespeicher mit Gleichspannung, wie beispielsweise Batterien oder Kondensatoren, insbesondere Doppelschichtkondensatoren wie UltraCaps, direkt mit dem Energiespeichernetz verbunden werden. Auf zusätzliche Ladegeräte, die oft zur Entkopplung mit den anderen Komponenten im System ein relativ langsames Regelverhalten aufweisen, kann dann verzichtet werden.

Darüber hinaus hat es sich als vorteilhaft erwiesen, wenn der Gleichspannungswandler eine Potentialtrennung aufweist. Damit können gerade bei einem Erdschluss Fehlerströme vermieden werden. Gleichzeitig bleibt bei Vorliegen eines Erdschlusses teilweise sogar das gesamte Gleichspannungsnetz betriebsfähig.

Bei einer weiteren vorteilhaften Ausgestaltung der Erfindung weist der erste Leistungswandler und der zweite Leistungswandler jeweils einen Stromrichter auf und die Spannung des Energiespeichers ist eine Wechselspannung. Stromrichter ermöglichen eine Energieübertragung zwischen einem Gleichspannungs- und einem Wechselspannungsnetz. Besonders vorteilhaft ist die Verwendung von bidirektionalen Stromrichtern, da mit diesen eine Energieübertragung in beide Richtungen möglich ist. Damit können Energiespeicher in dem Energiespeichernetz mit Wechselspannung geregelt oder gesteuert geladen oder entladen werden. Als Energiespeicher mit einem Wechselspannungsanschluss kommen beispielsweise rotierende Speicher wie Schwungmassenspeicher in Frage. Auf ein sonst übliches Stellglied, einen Umrichter, kann verzichtet werden. Dies spart Kosten. Gleichzeitig kann mit dem Stromrichter eine besonders hohe Regeldynamik erreicht werden, um auf Fehlerfälle derart schnell reagieren zu können, um Beschädigungen an anderen Komponenten des Gleichspannungsnetzes zu vermeiden. Auch hier kann beispielsweise mittels eines Transformators auf besonders einfache Weise eine galvanische Trennung der Teilnetze voneinander erreicht werden. Damit können gerade beim Auftreten eines Erdschluss Fehlerströme vermieden werden. Gleichzeitig bleibt bei Vorliegen eines Erdschlusses teilweise sogar das gesamte Gleichspannungsnetz betriebsfähig.

Bei einer weiteren vorteilhaften Ausgestaltung der Erfindung weist das Gleichspannungsnetz mindestens einen Verbindungswandler auf, wobei mittels des Verbindungswandlers das erste Gleichspannungsteilnetz und das zweite Gleichspannungsteilnetz miteinander verbunden sind. Durch den Verbindungswandler kann direkt ein Energieaustausch zwischen zwei Gleichspannungsteilnetzen erreicht werden. Ein Umweg über das Energiespeichernetz kann vermieden werden. Damit muss die Energie auf dem Weg von dem ersten Gleichspannungsteilnetz zum zweiten Gleichspannungsteilnetz nur einen Wandler passieren. In einer einfachen Ausführungsform ist der Verbindungswandler ein Gleichspannungswandler. Durch die direkte Verbindung der Gleichspannungsteilnetze kann eine Auswirkung auf das Energiespeichernetz vermieden werden. Dadurch sind weniger Spannungsschwankungen im Energiespeichernetz zu beobachten. In Folge dessen steigt die Lebenserwartung der mit dem Energiespeichernetz verbundenen Energiespeicher. Darüber hinaus können der erste und der zweite Leistungswandler kleiner bemessen werden, da sie nur für die Leistung des Energiespeichers ausgelegt sein müssen. Damit können die Kosten für die Realisierung des Gleichspannungsnetzes reduziert werden.

Bei einer weiteren vorteilhaften Ausgestaltung der Erfindung weist der Verbindungswandler einen dritten Leistungswandler, einen vierten Leistungswandler und ein weiteres Energiespeichernetz auf, wobei mittels des dritten Leistungswandlers das erste Gleichspannungsteilnetz und das weitere Energieversorgungsnetz miteinander verbunden sind, wobei mittels des vierten Leistungswandlers das zweite Gleichspannungsteilnetz und das weitere Energieversorgungsnetz miteinander verbunden sind, wobei das weitere Energiespeichernetz derart mit einem weiteren Energiespeicher verbunden ist, dass das weitere Energiespeichernetz die Spannung des weiteren Energiespeichers aufweist. Durch die Aufteilung der Energiespeicher im Gleichspannungsnetz auf zwei Energiespeichernetze ist es möglich, dass man unterschiedliche Batterien mit unterschiedlichen Ladungszuständen laden und entladen kann. Die Energiespeicher der unterschiedlichen Energiespeichernetze können dabei unabhängig voneinander geladen end entladen werden. Dies führt zu einer Erhöhung der Lebensdauer der Energiespeicher. Ebenso lassen sich unterschiedliche Speichertypen wie Batterie und Kondensator kombinieren. So kann beispielsweise das Energiespeichernetz mit Batterien verbunden werden, die langfristig ihre Energie abgeben und aufnehmen. An das weitere Energiespeichernetz werden dann Kondensatoren angeschlossen, mit denen hochdynamisch elektrische Energie bereitgestellt werden kann.

Bei einer weiteren vorteilhaften Ausgestaltung der Erfindung weist der dritte Leistungswandler und der vierte Leistungswandler jeweils einen Gleichspannungswandler auf und die Spannung des weiteren Energiespeichers ist eine Gleichspannung. Vorteilhafterweise sollten auch diese einen bidirektionalen Energiefluss erlauben. Mit diesen lassen sich die Gleichspannungen im Gleichspannungsnetz besonders dynamisch einstellen. So kann auf einen Fehlerfall derart schnell reagiert werden, dass es zu keinen Beschädigungen an elektrischen Vorrichtungen kommt. Darüber hinaus können Energiespeicher mit Gleichspannung, wie beispielsweise Batterien oder Kondensatoren, insbesondere Doppelschichtkondensatoren wie UltraCaps, direkt mit dem Energiespeichernetz verbunden werden. Auf zusätzliche Ladegeräte, die oft zur Entkopplung mit den anderen Komponenten im System ein relativ langsames Regelverhalten aufweisen, kann dann verzichtet werden. Darüber hinaus hat es sich als vorteilhaft erwiesen, wenn der Gleichspannungswandler eine Potentialtrennung aufweist. Damit können gerade bei Erdschluss Fehlerströme vermieden werden. Gleichzeitig bleibt bei Vorliegen eines Erdschlusses teilweise sogar das gesamte Gleichspannungsnetz betriebsfähig.

Bei einer weiteren vorteilhaften Ausgestaltung der Erfindung weist der dritte Leistungswandler und der vierte Leistungswandler jeweils einen Stromrichter auf und die Spannung des weiteren Energiespeichers ist eine Wechselspannung. Besonders vorteilhaft ist auch hier die Verwendung von bidirektionalen Stromrichtern, da mit diesen eine Energieübertragung in beide Richtungen möglich ist. Damit können Energiespeicher in dem weiteren Energiespeichernetz mit Wechselspannung geregelt oder gesteuert geladen oder entladen werden. Als Energiespeicher mit einem Wechselspannungsanschluss kommen beispielsweise rotierende Speicher wie Schwungmassenspeicher in Frage. Auf ein sonst übliches Stellglied, einen Umrichter, kann verzichtet werden. Dies spart Kosten. Gleichzeitig kann mit dem Stromrichter eine besonders hohe Regeldynamik erreicht werden, um auf Fehlerfälle derart schnell reagieren zu können. Damit sind Beschädigungen an anderen Komponenten des Gleichspannungsnetzes vermeidbar. Auch her kann beispielsweise mittels eines Transformators auf besonders einfache Weise eine galvanische Trennung der Teilnetze erreicht werden. Damit können gerade bei Erdschluss Fehlerströme vermieden werden. Gleichzeitig bleibt bei Vorliegen eines Erdschlusses teilweise sogar das gesamte Gleichspannungsnetz betriebsfähig.

Bei einer weiteren vorteilhaften Ausgestaltung der Erfindung ist zwischen dem Verbindungswandler und dem erste Gleichspannungsteilnetz ein Schalter angeordnet, wobei ein weiterer Schalter einen Punkt, der sich auf der Verbindung zwischen Verbindungswandler und dem Schalter befindet, mit dem Energiespeichernetz verbindet. Damit kann die Redundanz im System erhöht werden. Selbst bei Ausfall eines Leistungsstellers kann die Steuerbarkeit und/oder Regelbarkeit der Gleichspannungsteilnetze auch bei Ausfall eines Leistungsstellers gewährleistet werden.

Bei einer weiteren vorteilhaften Ausgestaltung der Erfindung weist das erste Gleichspannungsnetz eine erste Leitung auf, die zwischen dem ersten Leistungswandler und dem Verbindungswandler angeordnet ist, wobei die erste Leitung einen ersten Schalter aufweist, wobei das zweite Gleichspannungsnetz eine zweite Leitung aufweist, die zwischen dem zweiten Leistungswandler und dem Verbindungswandler angeordnet ist, wobei die zweite Leitung einen zweiten Schalter aufweist. Damit bekommt das Gleichspannungsnetz eine Ringstruktur. Dabei werden die Gleichspannungsteilnetze jeweils über eine Leitung gebildet, die an ihren Enden mit den Leistungsstellern verbunden ist. Bei Auftreten eines Fehlers fällt dann nicht das nahezu halbe Gleichspannungsnetz aus sondern nur ungefähr ein Viertel. Der erste Schalter ermöglicht bei einem Fehler im ersten Gleichspannungsteilnetz, nur einen Teil des ersten Gleichspannungsteilnetzes abzuschalten, in dem der Fehler vorhanden ist. Die Fehlerstelle lässt sich dann durch einen der Leistungswandler und einen der Schalter isolieren. Die restlichen Komponenten des Gleichspannungsnetzes bleiben betriebsfähig. Für das Abschalten der Schalter ist kein Abschaltvermögen von hohen Strömen erforderlich. Es ist hinreichend, Schalter zu verwenden, die nur stromlos schalten können, da bereits durch zwei Leistungswandler das Abschalten des Stroms möglich ist. Nachdem der entsprechende Schalter geöffnet wurde, ist ein Teil des Gleichspannungsteilnetzes wieder betreibbar. Da die Schalter nur ein geringes Abschaltvermögen aufweisen müssen, können hier anstelle eines Schützes ein Trenner verwendet werden.

Durch den Aufbau einer derartigen Ringstruktur wird eine noch bessere Redundanzeigenschaft des Gleichspannungsnetzes erreicht.

Im Folgenden wird die Erfindung anhand der in den Figuren dargestellten Ausführungsbeispiele näher beschrieben und erläutert. Es zeigen:

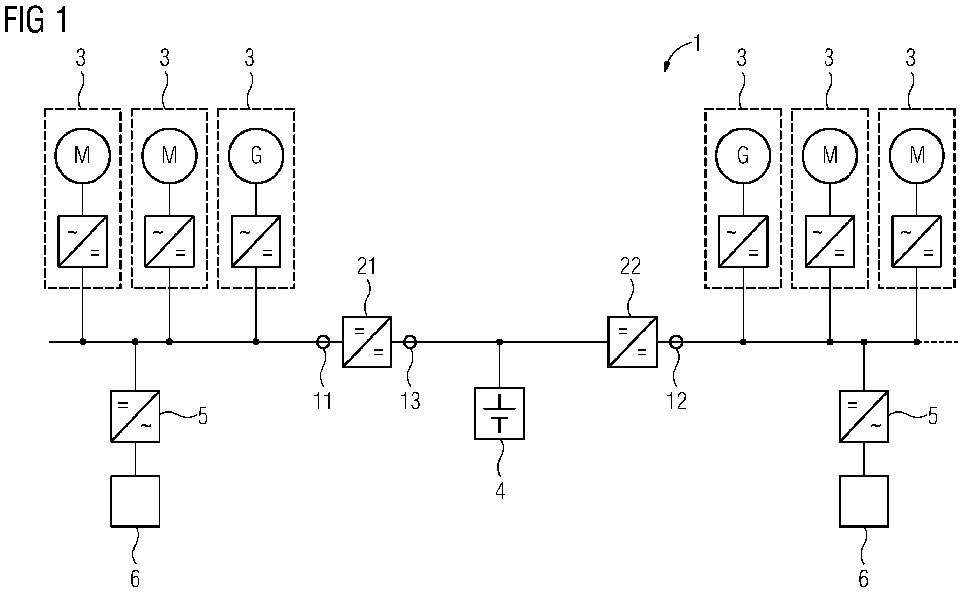

- FIG 1 bis FIG 6: Ausführungsbeispiele für ein Gleichspannungsnetz

Die FIG 1 zeigt ein Gleichspannungsnetz 1 mit zwei Gleichspannungsteilnetzen 11, 12 sowie einem Energiespeichernetz 13. Diese Teilnetze sind mit Leistungswandlern 21, 22 derart miteinander verbunden, dass ein Energieaustausch zwischen diesen Teilnetzen 11, 12, 13 mittels der Leistungswandler 21, 22 möglich ist. Gleichzeitig ermöglichen die Leistungswandler 21, 22, die Teilnetze schnell voneinander zu trennen. An die Gleichspannungsteilnetze 11, 12 sind elektrische Vorrichtungen 3 angeschlossen, die elektrische Verbraucher oder Quelle darstellen. Elektrische Energie erhalten diese elektrischen Vorrichtungen 3 aus einem Wechselspannungsnetz 6, das über eine oder mehrere Einspeisevorrichtungen 5 mit dem Gleichspannungsteilnetz 11, 12 verbunden ist. Alternativ oder zusätzlich kann auch elektrische Energie aus einem Energiespeicher 4, der mit dem Energiespeichernetz 13 direkt verbunden ist, bereitgestellt oder gespeichert werden. Die Regelung bzw. Steuerung des Energieflusses zum Energiespeicher 4 erfolgt mit Hilfe der Leistungssteller 21, 22.

Mit Hilfe der Leistungssteller 21, 22 kann der Energiefluss schnell unterbrochen werden, um beispielsweise fehlerhafte Komponenten vom Gesamtsystem zu isolieren. Damit kann nicht nur ein Betrieb der übrigen elektrischen Vorrichtungen 3 sichergestellt werden, sondern auch eine Beschädigung dieser elektrischen Vorrichtungen 3, beispielsweise verursacht durch Überstrom oder Überspannung, kann zuverlässig durch eine schnelle Reaktion der Leistungswandler 21, 22 vermieden werden.

Bei dem hier dargestellten Energiespeicher 4 handelt es sich um eine Batterie. Alternativ kann hier auch ein Kondensator, insbesondere ein Doppelschichtkondensator, eingesetzt werden. Diesen Energiespeichern ist gemeinsam, dass sie im Betrieb eine Gleichspannung aufweisen. Daher kommen in diesem Ausführungsbeispiel Gleichspannungswandler, auch als DC/DC Wandler bezeichnet, als Leistungssteller 21, 22 zum Einsatz.

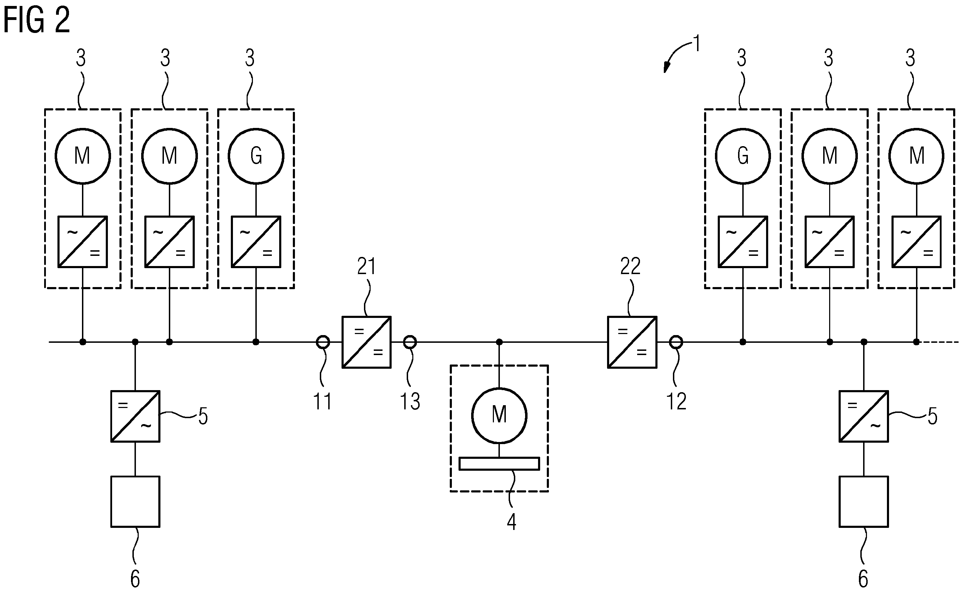

Die FIG 2 zeigt als Energiespeicher 4 einen Schwungmassenspeicher. Im Gegensatz zum Energiespeicher 4 der FIG 1 weist dieser Energiespeicher 4 im Betrieb eine Wechselspannung auf, wenn dieser direkt, d.h. ohne ein Stellglied wie beispielsweise einem Umrichter, an das Energiespeichernetz 13 angeschlossen wird. Um den Energieaustausch mit dem Energiespeieher 4 zu steuern oder zu regeln, kommen als Leistungssteller 21, 22 Stromrichter zum Einsatz, mit denen ein Wechselspannungsteilnetz und ein Gleichspannungsteilnetz verbindbar sind. Zur Vermeidung von Wiederholungen bezüglich übereinstimmender Bestandteile wird auf die Beschreibung zur FIG 1 sowie auf die dort eingeführten Bezugszeichen verwiesen.

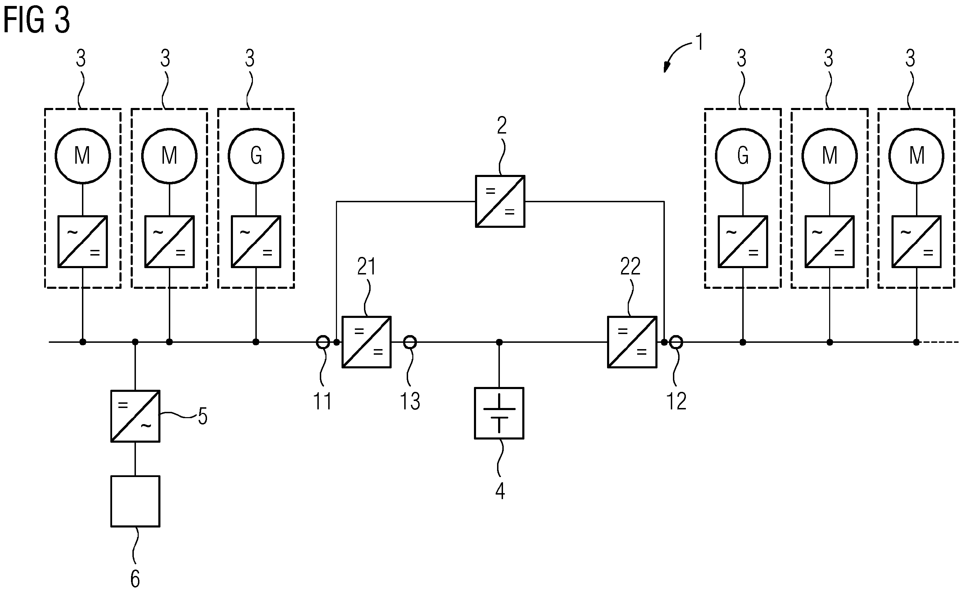

In FIG 3 ist das Gleichspannungsnetz 1 um einen Verbindungswandler 2 erweitert, der die beiden Gleichspannungsteilnetze 11, 12 direkt miteinander verbindet. Damit können die entsprechenden Leistungswandler 21, 22 zur Verbindung mit dem Energiespeichernetz 13 derart kleiner ausgelegt werden, dass nur der Energiebedarf zum oder vom Energiespeicher berücksichtigt wird. Der Energieaustausch zwischen den Gleichspannungsteilnetzen wird mit Hilfe des Verbindungswandlers 2 gesteuert bzw. geregelt. Auch in diesem Ausführungsbeispiel ist es möglich, einen Schwungmassenspeicher anstelle der Batterie zu verwenden. In diesem Fall kommen anstelle von DC/DC Wandlern als Leistungssteller 21, 22 dann wieder Stromrichter entsprechend FIG 2 zum Einsatz. Durch den leistungsfähigen Verbindungswandler 2, der auf die Versorgung des zweiten Gleichspannungsteilnetzes 12 ausgelegt ist, kann auf die Einspeisevorrichtung 5 zur Verbindung mit dem Wechselspannungsnetz 6 im zweiten Gleichspannungsteilnetz 12 verzichtet werden. Zur Vermeidung von Wiederholungen bezüglich übereinstimmender Bestandteile wird auf die Beschreibung zu den Figuren 1 und 2 sowie auf die dort eingeführten Bezugszeichen verwiesen.

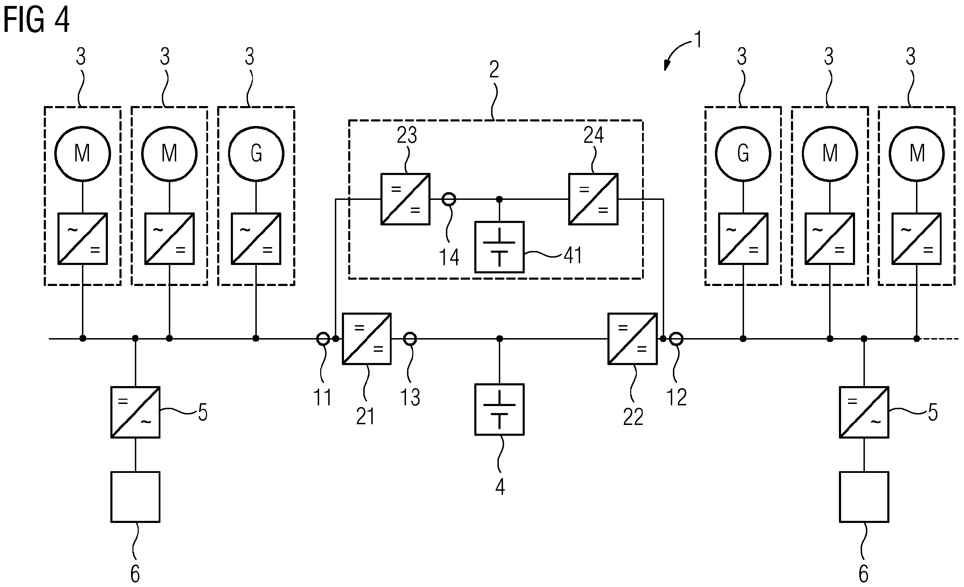

Eine Möglichkeit, mehrere Energiespeicher 4, 41, insbesondere mehrere unterschiedliche Energiespeicher 4, 41, in das Gleichspannungsnetz 1 zu integrieren, zeigt FIG 4. Dabei wird der Verbindungswandler 2 um ein weiteres Energiespeichernetz 14 erweitert. Zum Energieaustausch mit dem weiteren Energiespeichernetz 14 weist der Verbindungswandler 2 einen dritten Leistungssteller 23 und einen vierten Leistungssteller 24 auf. Mit diesen kann ein weiterer Energiespeicher 41 in das Gleichspannungsnetz 1 aufgenommen werden. Je nach Art des Energiespeichers 4, 41, kommen, wie oben bereits erläutert, als Leistungssteller 21, 22, 23, 24 DC/DC Wandler oder Stromrichter zum Einsatz. Zur Vermeidung von Wiederholungen bezüglich übereinstimmender Bestandteile wird auf die Beschreibung zu den Figuren 1 bis 3 sowie auf die dort eingeführten Bezugszeichen verwiesen. Durch die vergleichsweise hohe Anzahl an Leistungsstellern 21, 22, 23, 24 ist es auch in diesem Ausführungsbeispiel möglich, auf eine der dargestellten Einspeisevorrichtungen entsprechend FIG 3 zu verzichten.

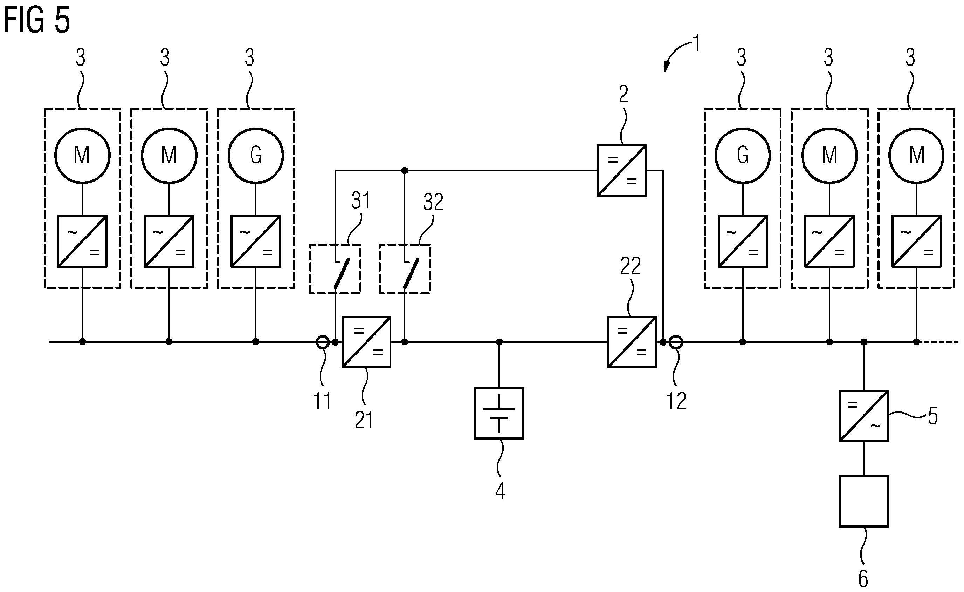

Die FIG 5 zeigt ein Ausführungsbeispiel, das um einen Schalter 31 und einen weiteren Schalter 32 erweitert wurde. Mit diesem Verbindungswandler 2 ist es je nach Schalterstellung der Schalter 31, 32 möglich, entweder einen Energietransfer zwischen den Gleichspannungsteilnetzen 11, 12 zu regeln oder zu steuern oder den Energiespeicher 4 zu laden bzw. zu entladen. Damit wird ohne Hinzufügen weiterer leistungselektronischer Stellglieder die Redundanz des Gleichspannungsnetzes 1 erhöht, da auch bei Ausfall eines Leistungsstellers 21, 22 der Betrieb des Gleichspannungsnetzes 1 weiterhin möglich ist. Aufgrund dieser Redundanz kann auf die Verwendung einer zweiten Einspeisevorrichtung 5 zur Verbindung mit einem Wechselspannungsnetz 6 verzichtet werden ohne die Verfügbarkeit des Gleichspannungsnetzes 1 negativ signifikant zu beeinflussen. Zur Vermeidung von Wiederholungen bezüglich übereinstimmender Bestandteile wird auf die Beschreibung zu den Figuren 1 bis 4 sowie auf die dort eingeführten Bezugszeichen verwiesen.

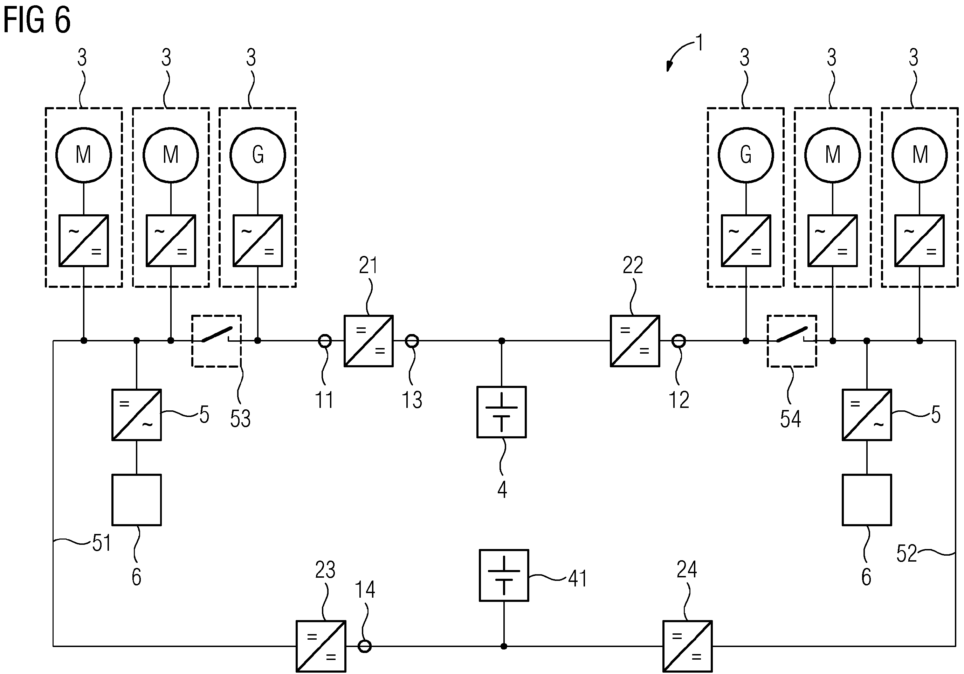

Die FIG 6 zeigt einen ringförmigen Aufbau des Gleichspannungsnetzes 1. Dabei werden die Gleichspannungsteilnetze 11, 12 jeweils durch eine Leitung 51, 52 gebildet. Die Verbindung der Leitungen 51, 52 mit Leistungsstellern 21, 22, 23, 24 erfolgt jeweils an den gegenüberliegenden Enden der Leitungen 51, 52. Die Leitungen 51, 52 können dabei als Kabel oder als Stromschiene ausgebildet sein. Der erste Schalter 51 ermöglicht bei einem Fehler im ersten Gleichspannungsteilnetz 11, nur einen Teil des ersten Gleichspannungsteilnetzes 11 abzuschalten, in dem der Fehler vorhanden ist. Damit können mehr elektrische Vorrichtungen 3 im Betrieb bleiben als es bei den zuvor dargestellten Ausführungsbeispielen der Fall ist. Im Fehlerfall ist dann der Schalter 53 und je nach Ort des Fehlers der erste oder dritte Leistungssteller 21, 23 abzuschalten, um negative Auswirkungen des Fehlers auf die übrigen elektrischen Vorrichtungen 3 des Gelichspannungsnetzes 1 zu vermeiden. Entsprechendes gilt für die zweite Leitung 52 des zweiten Gleichspannungsteilnetzes 12 und den dortigen zweiten Schalter 54 sowie den zweiten und vierten Leistungssteller 22, 24.

Dabei können der erste und der zweite Schalter 53, 54 als Schütz ausgebildet sein, die es ermöglichen, auch bei einem vorhandenen Stromfluss eine Schalthandlung vorzunehmen und in den geöffneten Zustand überzugehen. Alternativ ist es möglich, mittels der Leistungssteller 21, 22, 23, 24 den Strom im Schalter 53, 54 auf Null zu reduzieren und dann den Schalter 53, 54 zu öffnen. Daher kann anstelle eines Schützes auch ein Trenner als Schalter 53, 54 verwendet werden. Zur Vermeidung von Wiederholungen bezüglich übereinstimmender Bestandteile wird auf die Beschreibung zu den Figuren 1 bis 5 sowie auf die dort eingeführten Bezugszeichen verwiesen.

Zusammenfassend betrifft die Erfindung ein Gleichspannungsnetz mit einem ersten Gleichspannungsteilnetz, einem zweites Gleichspannungsteilnetz, einem Energiespeichernetz, einem ersten Leistungswandler, einem zweiten Leistungswandler und einem Energiespeicher. Zur Verbesserung des Gleichspannungsnetzes wird vorgeschlagen, dass das erste Gleichspannungsteilnetz und das Energiespeichernetz mittels des ersten Leistungswandlers miteinander verbunden sind, wobei das zweite Gleichspannungsteilnetz und das Energiespeichernetz mittels des zweiten Leistungswandlers miteinander verbunden sind, wobei das Energiespeichernetz derart mit dem Energiespeicher verbunden ist, dass das Energiespeichernetz die Spannung des Energiespeichers aufweist, wobei das erste Gleichspannungsteilnetz und/oder das zweite Gleichspannungsteilnetz über mindestens eine Einspeisevorrichtung mit mindestens einem Wechselspannungsnetz verbindbar sind. Ferner betrifft die Erfindung ein Verfahren zur Steuerung eines derartigen Gleichspannungsnetzes, wobei bei Auftreten eines Fehlers im Gleichspannungsnetz abhängig vom Ort des Fehlers mindestens einer der Leistungswandler abgeschaltet wird.

## Patentansprüche

1. Gleichspannungsnetz (1), aufweisend
- ein erstes Gleichspannungsteilnetz (11),
- ein zweites Gleichspannungsteilnetz (12),
- ein Energiespeichernetz (13),
- einen ersten Leistungswandler (21),
- einen zweiten Leistungswandler (22) und
- einen Energiespeicher (4),
wobei das erste Gleichspannungsteilnetz (11) und das Energiespeichernetz (13) mittels des ersten Leistungswandlers (21) miteinander verbunden sind, wobei das zweite Gleichspannungsteilnetz (12) und das Energiespeichernetz (13) mittels des zweiten Leistungswandlers (22) miteinander verbunden sind, wobei das Energiespeichernetz (13) derart mit dem Energiespeicher (4) verbunden ist, dass das Energiespeichernetz (13) die Spannung des Energiespeichers (4) aufweist,
wobei das erste Gleichspannungsteilnetz (11) und/oder das zweite Gleichspannungsteilnetz (12) über mindestens eine Einspeisevorrichtung (5) mit mindestens einem Wechselspannungsnetz (6) verbindbar sind, **dadurch geken nzeichnet**, dass das Gleichspannungsnetz (1) mindestens einen Verbindungswandler (2) aufweist, wobei mittels des Verbindungswandlers (2) das erste Gleichspannungsteilnetz (11) und das zweite Gleichspannungsteilnetz (12) miteinander verbunden sind.

2. Gleichspannungsnetz (1) nach Anspruch 1, wobei der erste Leistungswandler (21) und der zweite Leistungswandler (22) jeweils einen Gleichspannungswandler aufweisen und die Spannung des Energiespeichers (4) eine Gleichspannung ist.

3. Gleichspannungsnetz (1) nach Anspruch 1, wobei der erste Leistungswandler (21) und der zweite Leistungswandler (22) jeweils einen Stromrichter aufweisen und die Spannung des Energiespeichers (4) eine Wechselspannung ist.

4. Gleichspannungsnetz (1) nach einem der Ansprüche 1 bis 3, wobei der Verbindungswandler (2) einen dritten Leistungswandler (23), einen vierten Leistungswandler (24) und ein weiteres Energiespeichernetz (14) aufweist, wobei mittels des dritten Leistungswandlers (23) das erste Gleichspannungsteilnetz (11) und das weitere Energieversorgungsnetz (14) miteinander verbunden sind, wobei mittels des vierten Leistungswandlers (24) das zweite Gleichspannungsteilnetz (12) und das weitere Energieversorgungsnetz (14) miteinander verbunden sind, wobei das weitere Energiespeichernetz (14) derart mit einem weiteren Energiespeicher (41) verbunden ist, dass das weitere Energiespeichernetz (14) die Spannung des weiteren Energiespeichers (41) aufweist.

5. Gleichspannungsnetz (1) nach Anspruch 4, wobei der dritte Leistungswandler (23) und der vierte Leistungswandler (24) jeweils einen Gleichspannungswandler aufweisen und die Spannung des weiteren Energiespeichers (41) eine Gleichspannung ist.

6. Gleichspannungsnetz (1) nach Anspruch 4, wobei der dritte Leistungswandler (23) und der vierte Leistungswandler (24) jeweils einen Stromrichter aufweisen und die Spannung des weiteren Energiespeichers (41) eine Wechselspannung ist.

7. Gleichspannungsnetz (1) nach einem der Ansprüche 1 bis 6, wobei zwischen dem Verbindungswandler (2) und dem erste Gleichspannungsteilnetz (11) ein Schalter (31) angeordnet ist, wobei ein weiterer Schalter (32) einen Punkt (33), der sich auf der Verbindung zwischen Verbindungswandler (2) und dem Schalter (31) befindet, mit dem Energiespeichernetz (13) verbindet.

8. Gleichspannungsnetz (1) nach einem der Ansprüche 1 bis 7, wobei das erste Gleichspannungsnetz (11) eine erste Leitung (51) aufweist, die zwischen dem ersten Leistungswandler (21) und dem Verbindungswandler (2) angeordnet ist, wobei die erste Leitung (51) einen ersten Schalter (53) aufweist, wobei das zweite Gleichspannungsnetz (12) eine zweite Leitung (52) aufweist, die zwischen dem zweiten Leistungswandler (22) und dem Verbindungswandler (2) angeordnet ist, wobei die zweite Leitung (52) einen zweiten Schalter (54) aufweist.

9. Verfahren zur Steuerung eines Gleichspannungsnetzes (1) nach einem der Ansprüche 1 bis 8, wobei bei Auftreten eines Fehlers im Gleichspannungsnetz (1) abhängig vom Ort des Fehlers mindestens einer der Leistungswandler (21,22,23,24) abgeschaltet wird.

## Claims

1. DC voltage network (1), having
- a first DC voltage subnetwork (11),
- a second DC voltage subnetwork (12),
- an energy storage network (13),
- a first power converter (21),
- a second power converter (22) and
- an energy storage device (4),
wherein the first DC voltage subnetwork (11) and the energy storage network (13) are interconnected by means of the first power converter (21), wherein the second DC voltage subnetwork (12) and the energy storage network (13) are interconnected by means of the second power converter (22), wherein the energy storage network (13) is connected to the energy storage device (4) in such a way that the energy storage network (13) has the voltage of the energy storage device (4),
wherein the first DC voltage subnetwork (11) and/or the second DC voltage subnetwork (12) are able to be connected to at least one AC voltage network (6) via at least one feed apparatus (5), **characterised in that** the DC voltage network (1) has at least one connection converter (2), wherein the first DC voltage subnetwork (11) and the second DC voltage subnetwork (12) are interconnected by means of the connection converter (2).

2. DC voltage network (1) according to claim 1, wherein the first power converter (21) and the second power converter (22) each have a DC voltage converter and the voltage of the energy storage device (4) is a DC voltage.

3. DC voltage network (1) according to claim 1, wherein the first power converter (21) and the second power converter (22) each have a current converter and the voltage of the energy storage device (4) is an AC voltage.

4. DC voltage network (1) according to one of claims 1 to 3, wherein the connection converter (2) has a third power converter (23), a fourth power converter (24) and a further energy storage network (14), wherein the first DC voltage subnetwork (11) and the further energy supply network (14) are interconnected by means of the third power converter (23), wherein the second DC voltage subnetwork (12) and the further energy supply network (14) are interconnected by means of the fourth power converter (24), wherein the further energy storage network (14) is connected to a further energy storage device (41) such that the further energy storage network (14) has the voltage of the further energy storage device (41).

5. DC voltage network (1) according to claim 4, wherein the third power converter (23) and the fourth power converter (24) each have a DC voltage converter and the voltage of the further energy storage device (41) is a DC voltage.

6. DC voltage network (1) according to claim 4, wherein the third power converter (23) and the fourth power converter (24) each have a current converter and the voltage of the further energy storage device (41) is an AC voltage.

7. DC voltage network (1) according to one of claims 1 to 6, wherein a switch (31) is arranged between the connection converter (2) and the first DC voltage subnetwork (11), wherein a further switch (32) connects a point (33), situated on the connection between connection converter (2) and the switch (31), to the energy storage network (13).

8. DC voltage network (1) according to one of claims 1 to 7, wherein the first DC voltage network (11) has a first line (51), which is arranged between the first power converter (21) and the connection converter (2), wherein the first line (51) has a first switch (53), wherein the second DC voltage network (12) has a second line (52), which is arranged between the second power converter (22) and the connection converter (2), wherein the second line (52) has a second switch (54).

9. Method for controlling a DC voltage network (1) according to one of claims 1 to 8, wherein on the occurrence of a fault in the DC voltage network (1), at least one of the power converters (21,22,23,24) is switched off as a function of the location of the fault.

## Revendications

1. Réseau (1) à tension continue, comportant
- un premier réseau (11) partiel à tension continue,
- un deuxième réseau (12) partiel à tension continue,
- un réseau (13) d'accumulation d'énergie,
- un premier transformateur (21) de puissance,
- un deuxième transformateur (22) de puissance et
- un accumulateur (4) d'énergie,
dans lequel le premier réseau (11) partiel à tension continue et le réseau (13) d'accumulation d'énergie sont reliés entre eux au moyen du premier transformateur (21) de puissance, dans lequel le deuxième réseau (12) partiel à tension continue et le réseau (13) d'accumulation d'énergie sont reliés entre eux au moyen du deuxième transformateur (22) de puissance, dans lequel le réseau (13) d'accumulation d'énergie est relié à l'accumulateur (4) d'énergie de manière à ce que le réseau (13) d'accumulation d'énergie ait la tension de l'accumulateur d'énergie,
dans lequel le premier réseau (11) partiel à tension continue et/ou le deuxième réseau (12) partiel à tension continue peuvent être reliés à au moins un réseau (6) à tension alternative par au moins un système (5) d'alimentation, **caractérisé en ce que** le réseau (1) à tension continue a au moins un transformateur (2) de liaison, dans lequel, au moyen du transformateur (2) de liaison, le premier réseau (11) partiel à tension continue et le deuxième réseau (12) partiel à tension continue sont reliés entre eux.

2. Réseau (1) à tension continue suivant la revendication 1, dans lequel le premier transformateur (21) de puissance et le deuxième transformateur (22) de puissance ont chacun un transformateur à tension continue et la tension de l'accumulateur (4) d'énergie est une tension continue.

3. Réseau (1) à tension continue suivant la revendication 1, dans lequel le premier transformateur (21) de puissance et le deuxième transformateur (22) de puissance ont chacun un redresseur de courant et la tension de l'accumulateur (4) d'énergie est une tension alternative.

4. Réseau (1) à tension continue suivant l'une des revendications 1 à 3, dans lequel le transformateur de liaison a un troisième transformateur (23) de puissance et un quatrième transformateur (24) de puissance et un autre réseau (14) d'accumulation d'énergie, dans lequel, au moyen du troisième transformateur (23) de puissance, le premier réseau (11) partiel à tension continue et l'autre réseau (14) d'alimentation en énergie sont reliés entre eux, dans lequel, au moyen du quatrième transformateur (24) de puissance, le deuxième réseau (12) partiel à tension continue et l'autre réseau (14) d'alimentation en énergie sont reliés entre eux, dans lequel l'autre réseau (14) d'accumulation d'énergie est relié à un autre accumulateur (41) d'énergie de manière à ce que l'autre réseau (14) d'accumulation d'énergie ait la tension de l'autre accumulateur (41) d'énergie.

5. Réseau (1) à tension continue suivant la revendication 4, dans lequel le troisième transformateur (23) de puissance et le quatrième transformateur (24) de puissance ont chacun un transformateur de tension continue et la tension de l'autre accumulateur (41) d'énergie est une tension continue.

6. Réseau (1) à tension continue suivant la revendication 4, dans lequel le troisième transformateur (23) de puissance et le quatrième transformateur (24) de puissance ont chacun un onduleur et la tension de l'autre accumulateur (41) d'énergie est une tension alternative.

7. Réseau (1) à tension continue suivant l'une des revendications 1 à 6, dans lequel un interrupteur (31) est monté entre le transformateur (2) de liaison et le réseau (11) partiel à tension continue, un autre interrupteur (32) reliant au réseau (13) d'accumulation d'énergie un point (33), qui se trouve sur la liaison entre le transformateur (2) de liaison et l'interrupteur (31).

8. Réseau (1) à tension continue suivant l'une des revendications 1 à 7, dans lequel le premier réseau (11) à tension continue a une première ligne (51), qui est disposée entre le premier transformateur (21) de puissance et le transformateur (2) de liaison, la première ligne (51) ayant un premier interrupteur (53), dans lequel le deuxième réseau (12) à tension continue a une deuxième ligne (52), qui se trouve entre le deuxième transformateur (22) de puissance et le transformateur (2) de liaison, dans lequel la deuxième ligne (52) a un deuxième interrupteur (54).

9. Procédé de commande d'un réseau (1) à tension continue suivant l'une des revendications 1 à 8, dans lequel, à l'apparition d'un défaut dans le réseau (1) à tension continue, on met hors circuit au moins l'un des transformateurs (21, 22, 23, 24) de puissance en fonction de l'emplacement du défaut.
